# DEMANDE DE BREVET EUROPEEN

(11) **EP 3 550 166 A1**
(43) Date de publication de la demande: **09.10.2019**
(21) Numéro de dépôt: 19150547.8
(22) Date de dépôt: 07.01.2019
(51) Int. Cl.: F16D 25/08, F15B 15/20

(54) **PROCEDE DE MONTAGE D'UN EMETTEUR HYDRAULIQUE DANS UN TABLIER DE VEHICULE AUTOMOBILE, ET OUTIL DE MONTAGE**

(30) Priorité: 21.02.2018 FR 1851473
(71) Demandeur: PSA Automobiles SA, 78300 Poissy (FR)
(72) Inventeur: BERTAUD, JEAN-YVES, 94700 MAISONS ALFORT (FR); CRETEL, BRUNO, 70200 RIGNOVELLE (FR); VOISIN, JEAN PHILIPPE, 90350 EVETTE SALBERT (FR)

(57) **Abrégé**

Procédé de montage d'un émetteur hydraulique dans un perçage d'un tablier (22) de la caisse d'un véhicule automobile, cet émetteur comportant un corps (10) présentant un alésage recevant un piston (8) coulissant suivant un axe principal, délimitant vers un côté avant une chambre de pression (12) comprenant à son extrémité avant un orifice de sortie (14) parallèle à l'axe, ce procédé comportant avant l'introduction de l'émetteur dans le perçage du tablier (22), une étape d'installation d'un outil de blocage (30) comprenant un bouchon (34) fixé sur l'orifice de sortie (14), et en arrière de ce bouchon (34) une tige axiale de blocage (36) venant en appui sur le piston (8) qui est disposé dans sa position arrière.

## Description

La présente invention concerne un procédé de montage d'un émetteur hydraulique dans la caisse d'un véhicule, ainsi qu'un outil de montage mis en oeuvre par ce procédé.

Un type d'émetteur hydraulique connu pour une commande d'embrayage de véhicule automobile, présenté notamment par le document FR-A1-2634832, comporte un corps contenant un cylindre allongé suivant un axe principal, recevant un piston coulissant actionné d'un côté tourné vers l'arrière du véhicule, appelé par convention côté arrière, par une tige de commande reliée à une pédale d'embrayage.

Le côté avant du piston forme une chambre de pression, recevant du fluide venant d'un réservoir lors du recul complet de ce piston, pour l'envoyer vers un orifice de sortie formé à l'extrémité avant de ce corps.

Le corps de l'émetteur comporte généralement une collerette permettant après le passage d'une partie de ce corps dans un joint d'étanchéité entourant un perçage d'une tôle du tablier avant du véhicule, la fixation sur cette tôle. On dispose la partie arrière du corps avec la tige de commande dans l'habitacle, et la partie avant avec l'orifice de sortie dans le compartiment moteur pour relier cet orifice à un récepteur de commande de l'embrayage fixé sur le groupe motopropulseur.

Par ailleurs, certains émetteurs comportent un soufflet reliant l'extrémité arrière du corps à la tige de commande, permettant de fermer l'entrée arrière dans le cylindre pour éviter toute infiltration d'humidité ou de poussière afin de garantir la durée de vie de l'équipement.

Dans le cas où l'émetteur est mis en place par le compartiment moteur, il faut alors introduire successivement dans le perçage du joint d'étanchéité du tablier la partie avant de la tige de commande puis le soufflet, pour ajuster sur ce joint la collerette de fixation du corps disposée en arrière du soufflet.

Lors du montage de l'émetteur, si la tige de commande est rentrée au moins en partie dans le corps de cet émetteur on a alors une contraction axiale du soufflet de protection, qui entraîne une augmentation de son diamètre extérieur. Ce diamètre plus important formé par des bourrelets successifs du soufflet, peut poser des difficultés pour le glisser dans le perçage du joint d'étanchéité qui augmentent le temps de pose. On risque aussi en forçant de réaliser un accrochage de ce soufflet, qui pourrait l'endommager.

La présente invention a notamment pour but d'éviter ces problèmes de l'art antérieur.

Elle propose à cet effet procédé de montage d'un émetteur hydraulique dans un perçage d'un tablier de la caisse d'un véhicule automobile, cet émetteur comportant un corps présentant un alésage recevant un piston coulissant suivant un axe principal, délimitant vers un côté avant une chambre de pression comprenant à son extrémité avant un orifice de sortie parallèle à l'axe, ce procédé étant remarquable en ce qu'il comporte avant l'introduction de l'émetteur dans le perçage du tablier, une étape d'installation d'un outil de blocage comprenant un bouchon fixé sur l'orifice de sortie, et en arrière de ce bouchon une tige axiale de blocage venant en appui sur le piston qui est disposé dans sa position arrière.

Un avantage de ce procédé de montage est qu'en utilisant un bouchon disposant de la tige axiale à la place d'un bouchon ordinaire court, nécessitant le même temps pour sa fixation sur le corps, on obtient un blocage simple et efficace du piston vers l'avant. Le piston ainsi que la tige de commande sont alors dans leurs positions entièrement reculées, ce qui donne pour un émetteur hydraulique équipé d'un soufflet, une extension axiale complète de ce soufflet qui présente un encombrement radial minimum.

L'opérateur peut alors facilement introduire la tige de commande suivie du soufflet dans le perçage du joint d'étanchéité du tablier, sans s'inquiéter d'un recul éventuel de cette tige qui agrandirait le diamètre de ce soufflet en rendant plus délicate son introduction.

Le procédé de montage de l'émetteur selon l'invention peut de plus comporter une ou plusieurs des caractéristiques suivantes, qui peuvent être combinées entre elles.

Avantageusement, l'étape d'installation de l'outil de blocage comporte un vissage de cet outil dans l'orifice de sortie.

Avantageusement, le procédé comporte après l'étape d'installation de l'outil de blocage, une étape d'introduction du côté arrière de l'émetteur hydraulique dans un joint formé autour du perçage du tablier.

De plus, le procédé peut comporter après l'étape d'introduction de l'émetteur dans le joint, une étape de dévissage de l'outil de blocage pour le retirer.

L'invention a aussi pour objet un outil de blocage mis en oeuvre par un procédé de montage comprenant l'une quelconque des caractéristiques précédentes, remarquable en ce que le bouchon comporte un filetage extérieur.

Dans ce cas, avantageusement la tige de blocage comporte un contour circulaire présentant un diamètre inférieur à celui du filetage extérieur.

De plus, avantageusement le bouchon comporte du côté avant un embout de préhension comprenant une collerette de traction puis une partie plate parallèle à l'axe.

Avantageusement, l'outil de blocage est formé par le moulage d'une matière plastique.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 présente un émetteur hydraulique de commande d'embrayage vu de côté, avec une coupe axiale du corps, contenant un outil de blocage prévu pour un procédé de montage selon l'invention ; et
- la figure 2 est une vue extérieure de ce corps présentant en transparence l'outil de blocage.

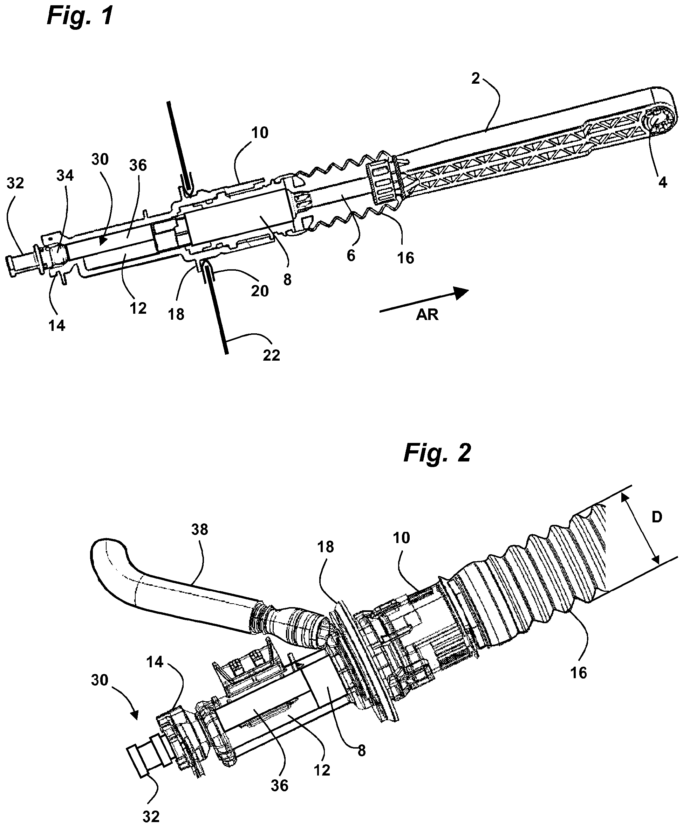

Les figures 1 et 2 présentent une tige de commande 2 réalisée par le moulage d'une matière plastique, comprenant axialement du côté arrière indiqué par la flèche AR, une partie rigide présentant à son extrémité un perçage 4 de fixation sur une pédale d'embrayage.

La partie avant de la tige de commande 2 présente un axe avant 6 qui rentre dans l'alésage cylindrique d'un corps 10, pour pousser vers l'avant un piston 8 coulissant dans cet alésage.

Le piston 8 ferme une chambre avant de pression 12 prolongeant l'alésage cylindrique, qui se termine à son extrémité avant par un orifice de sortie de la pression 14 parallèle à l'axe principal, et décalé radialement sur le côté de cette chambre. L'orifice de sortie 14 comporte un filetage intérieur permettant de recevoir un raccord de fixation d'un tube envoyant la pression vers un récepteur de commande de l'embrayage.

Le corps 10 comporte axialement sensiblement au milieu, une collerette transversale 18 formant un plan venant en appui axial sur la face avant d'un joint d'étanchéité 20 entourant un perçage d'une tôle du tablier 22 du véhicule. Le joint d'étanchéité 20 assure en particulier une étanchéité évitant des remontées de bruits venant du compartiment moteur vers l'habitacle du véhicule.

Le corps 10 comporte en avant de la collerette transversale 18 un raccord permettant de recevoir un tube d'alimentation 38 relié à un réservoir contenant le fluide du circuit hydraulique.

Un soufflet de protection 16 réalisé en élastomère, enserre d'un côté l'extrémité arrière du corps 10 et de l'autre côté l'extrémité avant de la partie arrière rigide de la tige de commande 2, afin d'assurer une étanchéité entre ces deux éléments lors des mouvements de la tige, en fermant le volume intérieur qui débouche sur le côté arrière de l'alésage cylindrique et du piston 8 pour les protéger.

Dans la position reculée de la tige de commande 2, présentée par les figures 1 et 2, le soufflet 16 a sa plus grande longueur ce qui forme des bourrelets extérieurs présentant un petit diamètre D. L'encombrement radial de ce soufflet 16 est alors minimum, et correspond sensiblement à la partie cylindrique extérieure du corps 10 de l'émetteur qui est disposée en arrière de la collerette transversale 18.

Un outil de blocage 30 comporte successivement en partant de l'avant, un embout de préhension 32 comprenant une petite collerette permettant une traction, puis une partie plate parallèle à l'axe facilitant la préhension de cet embout pour le tourner. Il comporte ensuite un bouchon 34 entouré d'un filetage extérieur se vissant dans le filetage intérieur de l'orifice de sortie 14, et enfin une tige axiale de blocage 36 disposant d'un diamètre extérieur inférieur à celui du filetage, permettant son introduction dans cet orifice.

Dans sa position de montage présentée figure 1 et figure 2, l'extrémité arrière de la tige de blocage 36 est en contact avec la face avant du piston 8 qui est dans sa position reculée, pour empêcher son avancée.

En particulier l'outil de blocage 30 peut constituer le bouchon mis en place par le fabricant de l'émetteur hydraulique, afin de fermer la chambre de pression 12 pour éviter l'introduction de poussières lors des manipulations et des transports vers l'atelier d'assemblage des véhicules. Réalisé de manière économique par un moulage d'une matière plastique, l'outil de blocage 30 avec sa tige de blocage 36 présente une modification du coût minime par rapport à un bouchon seul.

Pour le montage de l'émetteur hydraulique, l'opérateur introduit alors l'extrémité arrière de la tige de commande 2 dans le joint d'étanchéité 20 puis le soufflet 16, en poussant légèrement si nécessaire pour obtenir la place nécessaire dans ce joint, sans risquer un recul de la tige qui augmenterait le diamètre extérieur du soufflet en rendant plus difficile son passage dans le joint.

Ensuite l'opérateur fixe le corps 10 sur le joint 20 en disposant du côté arrière un jonc d'arrêt pour réaliser son calage axial. Lors du montage du tube de liaison vers le récepteur hydraulique, l'opérateur retire alors l'outil de blocage 30 en le dévissant comme pour un bouchon simple vissé de la même manière. L'outil de blocage 30 peut alors être recyclé pour une utilisation sur un nouvel émetteur hydraulique, ou être éliminé.

On notera que le soufflet de protection 16 présente un encombrement extérieur plus important qu'un simple joint racleur fixé à l'arrière de l'alésage du corps 10, disposant d'une lèvre en appui sur l'axe avant 6 de la tige de commande 2, qui n'ajoute pas d'encombrement radial autour de ce corps pouvant gêner le montage sur le véhicule. Toutefois le soufflet de protection 16 assure un plus haut niveau de protection nécessaire pour obtenir des durées de vie importantes de l'émetteur hydraulique.

## Revendications

1. Procédé de montage d'un émetteur hydraulique dans un perçage d'un tablier (22) de la caisse d'un véhicule automobile, cet émetteur comportant un corps (10) présentant un alésage recevant un piston (8) coulissant suivant un axe principal, délimitant vers un côté avant une chambre de pression (12) comprenant à son extrémité avant un orifice de sortie (14) parallèle à l'axe, **caractérisé en ce qu'**il comporte avant l'introduction de l'émetteur dans le perçage du tablier (22), une étape d'installation d'un outil de blocage (30) comprenant un bouchon (34) fixé sur l'orifice de sortie (14), et en arrière de ce bouchon (34) une tige axiale de blocage (36) venant en appui sur le piston (8) qui est disposé dans sa position arrière.

2. Procédé de montage selon la revendication 1, **caractérisé en ce que** l'étape d'installation de l'outil de blocage (30) comporte un vissage de cet outil (30) dans l'orifice de sortie (14).

3. Procédé de montage selon la revendication 2, **caractérisé en ce qu'**il comporte après l'étape d'installation de l'outil de blocage (30), une étape d'introduction du côté arrière de l'émetteur hydraulique dans un joint (20) formé autour du perçage du tablier (22).

4. Procédé de montage selon la revendication 3, **caractérisé en ce qu'**il comporte après l'étape d'introduction de l'émetteur dans le joint (20), une étape de dévissage de l'outil de blocage (30) pour le retirer.

5. Outil de blocage mis en oeuvre par un procédé de montage selon l'une quelconque des revendications précédentes, **caractérisé en ce que** le bouchon (34) comporte un filetage extérieur.

6. Outil de blocage selon la revendication 5, **caractérisé en ce que** la tige de blocage (36) comporte un contour circulaire présentant un diamètre inférieur à celui du filetage extérieur.

7. Outil de blocage selon la revendication 5 ou 6, **caractérisé en ce que** le bouchon (34) comporte du côté avant un embout de préhension (32) comprenant une collerette de traction puis une partie plate parallèle à l'axe.

8. Outil de blocage selon l'une quelconque des revendications 5 à 7, **caractérisé en ce qu'**il est formé par le moulage d'une matière plastique.
